# EUROPEAN PATENT SPECIFICATION

(11) **EP 1 712 751 B1**
(45) Date of publication and mention of the grant of the patent: **11.07.2012**
(21) Application number: 06112249.5
(22) Date of filing: 05.04.2006
(51) Int. Cl.: F01N 3/035, F01N 3/28, F01N 3/20, B01F 3/04, B01F 5/04, B01F 5/06

(54) **Static mixer**
Statischer Mischer
Mixeur statique

(30) Priority: 15.04.2005 IT MI20050655
(43) Date of publication of application: 18.10.2006
(73) Proprietor: FPT Industrial S.p.A., 10156 Torino (IT)
(72) Inventor: Dellora, Giancarlo, 10129, Torino (IT); Hagin, Harald, 8280, Kreuzlingen (CH)
(74) Representative: Borsano, Corrado

(56) References cited:
- GB-A- 2 381 218
- US-A- 5 489 153
- US-A1- 2002 162 322

## Description

### SCOPE OF THE INVENTION

The present invention refers to a static mixer, in particular a mixer able to dissolve a nebulized solution in a gaseous current, more in particular a solution of reagent able to develop ammonia in the current of exhaust gases of an engine equipped with an SCR system for reduction of nitric oxides.

### PRIOR ART

One of the most pressing problems in the field of internal combustion engines, in particular as regards diesel engines, is the formation of nitric oxides during combustion; these nitric oxides are discharged with the exhaust gases of the engine and represent one of the main pollutants. Although various solutions have been proposed to reduce the formation of these compounds, their level in the exhaust gases still represents a problem and, also considering application of ever stricter legal regulations, systems for reduction of nitric oxides in exhaust gases must be used. One of these solutions is known as the SCR (Selective Catalytic Reduction) system; this is based on the reaction, promoted by a suitable catalytic system, between the nitric oxides present in the exhaust gases and ammonia specifically introduced as reducing agent. The ammonia is usually introduced in the form of a reagent, preferably liquid, able to release ammonia in suitable temperature conditions, or due to the action of specific catalysts, directly in the nitric oxide reduction system. The preferred source is usually urea in aqueous solution, for example between 10 and 60% in weight (concentrations of around 32.5% are preferred) from which the ammonia is obtained through hydrolysis.

The urea may be introduced in various ways, and is generally nebulized in the current of exhaust gases, upstream of a converter containing the SCR catalyzer. Air type nebulization systems exist, that is to say in which the liquid is mixed with pressurized air and the mix thus obtained is expanded introducing this in the exhaust gas line, or the solution is sprayed using a specific injection device, or injector, usually passing the liquid at a certain pressure through a nozzle or valve, without using air. This latter method has aroused growing interest as mixing with pressurized air promotes precipitation of solids from the solution of urea which may cause problems to the nebulization system. Furthermore, pressurized-air systems are very expensive, with much more complex functioning compared with injectors that do not use air.

On the other hand, air-less systems are less effective in dissolving the liquid. To promote dissolution of the solution in the current of gas, a static mixer is often used located ahead of a catalytic converter, even more necessary if the injection system does not use air.

For example, from patent document GB 2.381.218A it's known a static mixer comprising a duct having a longitudinal axis adapted to be run through by a gaseous current in a direction parallel to said axis, a plurality of fins each able to impart to the gas a tangential velocity component with respect to the aforesaid axis. A first set of the cited fins arranged around the aforesaid axis is such as to impart to the gas a global rotary movement around such axis, while a second set of the fins is arranged around the aforesaid first set in such a way as to impart to the gas a global rotary movement around the aforesaid axis in the opposite sense with respect to that imparted by the first set.

However, the capabilities of the cited existing mixer are not satisfactory as regards performance. To combine high dispersion efficiency with acceptable pressure drops and with structures that are not too complex to obtain, many types of mixers used confer tangential velocity components on the gas with respect to the axis of the ducts, for example with a set of propeller-type elements that induce general rotation of the mass downstream of the mixer. As a result, the gas and in particular the urea and its decomposition products, tend to concentrate towards the outside of the tubes and this effect is propagated as far as the catalytic converter; as a result, this does not operate in an uniform manner and its efficiency is considerably impaired. Furthermore, in the absence of the mixer, distribution of the reagent in the gas would be entirely inadequate and the catalyzer could not work. It is therefore desirable to be able to dissolve the reagent in the current of exhaust gases without encountering the aforementioned problems while using a static mixer of simple construction such that the gaseous current that passes through this is not affected by excess pressure drops.

### SUMMARY

The aforementioned problems have been solved according to the present invention using a static mixer for a current of gas comprising:
a duct having a longitudinal axis adapted to be run through by a gaseous current in a direction parallel to said axis; a plurality of fins each able to impart to the gas a tangential velocity component with respect to the aforesaid axis; a first set of the aforesaid fins arranged around the aforesaid axis is such as to impart to the gas a global rotary movement around such axis;
a second set of the aforesaid fins arranged around the aforesaid first set in such a way as to impart to the gas a global rotary movement around the aforesaid axis in the opposite sense with respect to that imparted by the first set, the mixer being characterized in that said fins are defined on the edges of at least a first and a second set of strips forming a mesh-type supporting structure;; said fins having an alternated sloped configuration with respect of the plane of said strips.

The invention refers in particular to the contents of the claims attached.

### LIST OF FIGURES

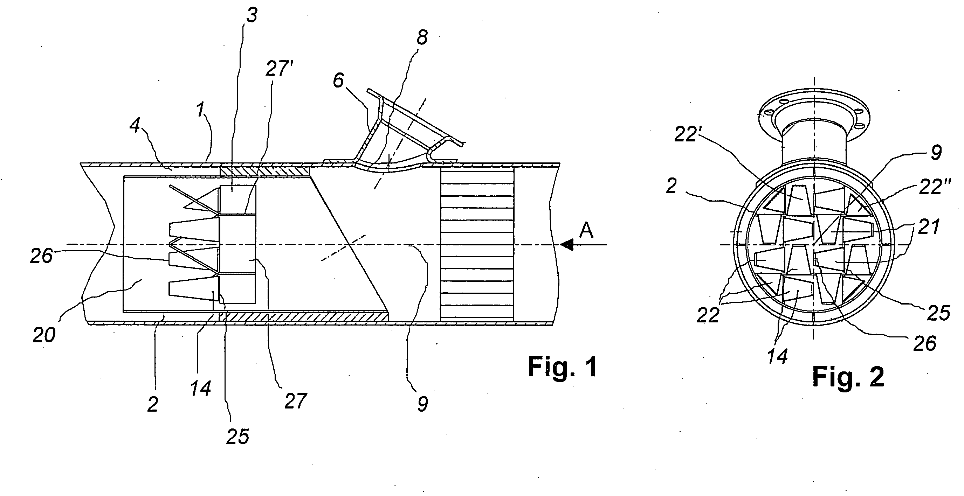

The present invention will now be illustrated with a detailed description of preferred but not exclusive embodiments provided for example purposes only with the aid of figures 1 and 2 attached which show a lengthwise section and a front view respectively of an exhaust gas pipe of an internal combustion engine, including a mixer according to the present invention.

Figures 3, 4 and 5 are two orthogonal views and a prospect view respectively of a strip with a number of fins, forming part of a mixer according to the present invention.

Figure 6 is a prospect view of another strip, able to cooperate with that shown in figures 3, 4 and 5.

### DETAILED DESCRIPTION OF AN EMBODIMENT

Referring to figures 1 and 2, a static mixer according to the present invention is described.

Figure 1 shows an exhaust gas pipe 1 of an internal combustion engine. It is equipped with a static mixer 20 according to the present invention. The mixer 20 includes a duct 2 having a longitudinal axis 9 that may be a symmetrical axis of the mixer or part of this. The gases pass through the pipe in the direction of arrow A, parallel to axis 9, and a current of gas flows through the mixer in this direction. The mixer includes a structure 3, which may be mesh shaped, and supports a plurality of fins 14, each able to imbue the gases with a tangential velocity component with respect to axis 9; according to a possible embodiment of the invention, these are flat fins; the plane in which they lay forms an angle with axis 9 preferably of between 10 and 45°, for example around 30°. Structure 3 may consist of flat strips arranged parallel to axis 9 so as to apply minimum possible resistance to the flow of gases. The fins may be tapered starting from their base 25 up to the free end 26, that is to say basically in the direction of the flow of gases.

With reference to figure 2, it is possible to identify a first set of fins 21 each capable of conferring a tangential component on the current of gas. The direction in which the gas flows is now directed towards the observer. The fins 21 confer a direct tangential component from their base 25 to their free end 26: it is easy to note how the first set of fins confers, generally, on the gases a clockwise direction of rotation for the observer (counterclockwise with respect to the gases that flow). Fins 22 which, around the first set of fins, represent the second series and induce a rotary movement around axis 9 counterclockwise for the observer. It can be noted that it is possible that not all the fins of one set contribute to the rotary movement as specified above. For example, in the case indicated, part of the fins, of which one is indicated with reference 22', impart to the gas a direct tangential component towards the wall of duct 2 and whose contribution to the rotary movement may be nil or even negative (although almost nil, anyway) with respect to the global rotation induced by the second set of fins. In the case shown in the example, this takes place due to construction reasons. If considered necessary, it is also possible to use twisted fins so that these provide their contribution to the rotation required. Other fins may be of different shape from the others so as not to interfere with other structures such as the wall of the duct 2.

According to requirements, it is also possible to envisage more than two sets of fins that create alternate rotational movements. It has been found that, for the application described, the presence of only two sets is sufficient to already guarantee sufficient mixing in the case also of injection of a solution of urea not assisted with pressurized air.

The supporting structure 3 with the fins can be constructed, according to an embodiment, using a set of strips 27 with fins along one edge.

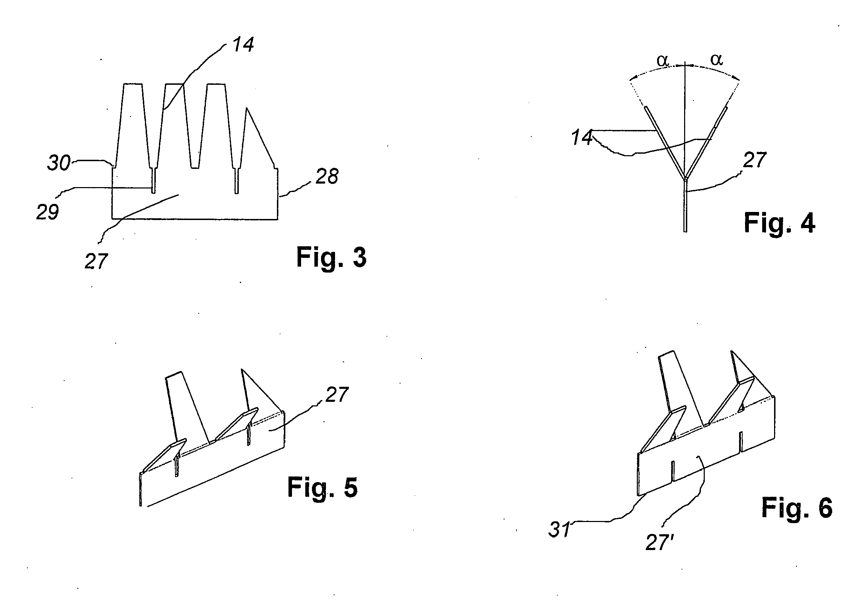

Figures 3, 4, 5 and 6, show strips 27 and 27', of basically rectangular shape, with a number of fins 14 on their longer sides 30.

According to an embodiment of the invention, the fins are flat and lie in sloping planes with respect to the plane of the strip which forms an angle α corresponding to the angle that fins must form with axis 9 (with which, as can be seen in figure 1, the plane of the strips will lie parallel). The slope of the fins is alternate with respect to the plane of the strip as can be seen in the prospect views of figures 5 and 6. A first set of strips 27 may have notches of a length at least equal to half of their shorter side which lead out from the longer side 30 perpendicular to this. A second set of strips 27' intended to be fitted perpendicularly to strips 27 will have the notches (figure 6) leading out of the longer side 31 opposite to that with the fins. In this way, suitably inserting the notches of strips 27 in those of strips 27' it is possible to construct a mesh type structure 3 as shown above. The strips may be suitably joined together and to the duct 2 in a known manner, for example by welding or push-fit or combining such techniques. More complex structures than that shown (with a total of four strips) may also be obtained in a similar manner.

The structure shown comprises 16 fins and combines maximum simplicity of construction with considerable efficiency.

The mixer according to the present invention permits good mixing with reduced pressure drops. Due to the counter-rotary rotational movements induced, the general centrifugal effect of the gases is reduced sufficiently to avoid problems of concentration of the reagents towards the outside as described above.

The mixer described may form part of a mixing module, which represents a further embodiment of the invention, able for example to inject and dissolve a solution of urea in a current of exhaust gases, for example in the current of exhaust gases of an engine equipped with SCR catalytic system. Referring to figure 1, this includes pipe 1 and mixer 20.

The module may include means of injection of a solution of urea upstream of the mixer, for example an injector suitably fixed in the portion of pipe 6.

According to a possible embodiment of the invention, between the pipe and the duct, which are preferably coaxial, there is a clearance 4. This clearance is equal to between 1/20 and 1/15 of the inner diameter of the duct in the case of a circular section duct, and its value may preferably be between 3 and 10 mm, for example around 5 mm.

In this way, the mixer is characterized by a certain insulation against heat towards the outside which is advantageous if the liquid is injected so that the liquid sprayed may be trapped by the current of gas and directed inside the static mixer, while part of the current of exhaust gas without the liquid sprayed or with the reduced quantity thereof, flows in clearance 4.

In fact, deposits due to urea decomposition products, possibly on relatively cold surfaces, are avoided. In the project, due consideration will be given to how the jet fans out, on leaving the injection device, and the mixer may be shaped so as to shield the walls of the pipe 1 from the jet, as shown in figure 1.

Furthermore, the gas that flows in clearance 4, further reduces the effect of any centrifugal force present in the gas leaving from the mixer.

The invention also refers to an internal combustion engine, preferably diesel, equipped with an SCR catalytic system and a mixer as described above, located in the exhaust gas pipe leaving out of the engine and a vehicle, for example an industrial vehicle, equipped with said engine.

## Claims

1. Static mixer for a current of gas comprising a duct (2) having a longitudinal , axis (9) adapted to be run through by a gaseous current in a direction parallel to said axis; a plurality of fins (14) each able to impart to the gas a tangential velocity component with respect to the aforesaid axis; a first set of the aforesaid fins (21) arranged around the aforesaid axis is such as to impart to the gas a global rotary movement around such axis; a second set of the aforesaid fins (22) arranged around the aforesaid first set in such a way as to impart to the gas a global rotary movement around the aforesaid axis in the opposite sense with respect to that imparted by the first set, the mixer being **characterized in that** said fins (14;21,22) are defined on the edges of at least a first and a second set of strips (27,27') forming a mesh-type supporting structure (3); said fins (14;21,22) having an alternated sloped configuration with respect of the plane of said strips (27,27').

2. Static mixer according to claim 1, **characterized in that** said strips (27,27') of said first and said second set have a rectangular shape, with said fins (14;21,22) placed on longer sides of said strips (27,27').

3. Static mixer according to claim 1 or 2, **characterized in that** said fins (14;21,22) are flat and that the plane in which they lie forms an angle (α) with said axis (9) of between 10 and 45°.

4. Static mixer according to any claim 1 to 3, **characterized in that** said strips (27) of first set have notches adapted to insert on notches of the strips (27') of said second set for forming said mesh-type supporting structure (3).

5. Mixing module including static mixer according to any previous claim 1 to 4.

6. Internal combustion engine, preferably diesel, fitted with an SCR catalytic system and a mixer according to any claim from 1 to 4, placed in the exhaust gas tube leading out of the engine.

7. Vehicle fitted with an engine according to claim 6.

## Patentansprüche

1. Statischer Mischer für einen Gasstrom, mit einer Röhre (2), die eine Längsachse (9) aufweist und derart ausgebildet ist, dass sie von einem gasförmigen Strom in einer Richtung parallel zu der Achse durchströmt wird; einer Mehrzahl von Rippen (14), die jeweils in der Lage sind, auf das Gas eine tangentiale Geschwindigkeitskomponente in Bezug auf die Achse aufzubringen; wobei ein erster Satz der Rippen (21), die um die Achse angeordnet sind, derart ausgebildet ist, dass auf das Gas eine globale Drehbewegung um die Achse aufgebracht wird; wobei ein zweiter Satz der Rippen (22) um den ersten Satz so angeordnet ist, dass auf das Gas eine globale Drehbewegung um die Achse in der entgegengesetzten Richtung in Bezug auf die, die durch den ersten Satz aufgebracht wird, aufgebracht wird, wobei der Mischer **dadurch gekennzeichnet ist, dass** die Rippen (14; 21, 22) an den Rändern von zumindest einem ersten und einem zweiten Satz von Streifen (27, 27') definiert sind, wobei eine Stützstruktur (3) vom Gittertyp gebildet wird; wobei die Rippen (14; 21, 22) eine abwechselnde geneigte Konfiguration in Bezug auf die Ebene der Streifen (27, 27') besitzen.

2. Statischer Mischer nach Anspruch 1,
**dadurch gekennzeichnet, dass** die Streifen (27, 27') des ersten und des zweiten Satzes eine rechtwinklige Form besitzen, wobei die Rippen (14; 21, 22) an längeren Seiten der Streifen (27, 27') angeordnet sind.

3. Statischer Mischer nach einem der Ansprüche 1 oder 2,
**dadurch gekennzeichnet, dass** die Rippen (14; 21, 22) flach sind und dass die Ebene, in der sie liegen, einen Winkel (oc) mit der Achse (9) zwischen 10 und 45° bildet.

4. Statischer Mischer nach einem der Ansprüche 1 bis 3,
**dadurch gekennzeichnet, dass** die Streifen (27) des ersten Satzes Kerben aufweisen, die zum Einsetzen auf Kerben der Streifen (27') des zweiten Satzes angepasst sind, um den Stützaufbau (3) vom Gittertyp zu bilden.

5. Mischmodul, mit einem statischen Mischer nach einem der vorhergehenden Ansprüche 1 bis 4.

6. Verbrennungsmotor, bevorzugt Diesel, der mit einem SCR-Katalysatorsystem und einem Mischer nach einem der Ansprüche 1 bis 4, angeordnet in dem aus dem Motor führenden Abgasrohr, ausgestattet ist.

7. Fahrzeug, das mit einem Motor nach Anspruch 6 ausgestattet ist.

## Revendications

1. Mixeur statique pour un courant de gaz comprenant un conduit (2) ayant un axe longitudinal (9) adapté pour être traversé par un courant gazeux dans une direction parallèle audit axe ; une pluralité d'ailettes (14) pouvant chacune communiquer au gaz une composante de vitesse tangentielle par rapport à l'axe mentionné précédemment ; un premier ensemble des ailettes (21) mentionnées précédemment agencé autour de l'axe mentionné précédemment est tel qu'il communique au gaz, un mouvement de rotation global autour d'un tel axe ; un deuxième ensemble des ailettes (22) mentionnées précédemment est agencé autour du premier ensemble mentionné précédemment afin de communiquer au gaz, un mouvement de rotation global autour de l'axe mentionné précédemment dans le sens opposé par rapport à celui communiqué par le premier ensemble, le mixeur étant **caractérisé en ce que** lesdites ailettes (14 ; 21, 22) sont définies sur les bords d'au moins un parmi un premier et un deuxième ensemble de bandes (27, 27') formant une structure de support de type à mailles (3) ; lesdites ailettes (14 ; 21, 22) ayant une configuration inclinée alternée par rapport au plan desdites bandes (27, 27').

2. Mixeur statique selon la revendication 1, **caractérisé en ce que** lesdites bandes (27, 27') dudit premier et dudit deuxième ensemble ont une forme rectangulaire, avec lesdites ailettes (14 ; 21, 22) placées sur les côtés plus longs desdites bandes (27, 27').

3. Mixeur statique selon la revendication 1 ou 2, **caractérisé en ce que** lesdites ailettes (14 ; 21, 22) sont plates et **en ce que** le plan dans lequel elles se trouvent, forme un angle (α) avec ledit axe (9) compris entre 10 et 45°.

4. Mixeur statique selon l'une quelconque des revendications 1 à 3, **caractérisé en ce que** lesdites bandes (27) du premier ensemble ont des encoches adaptées pour s'insérer sur les encoches des bandes (27') dudit deuxième ensemble afin de former ladite structure de support (3) de type à mailles.

5. Module de mélange comprenant le mixeur statique selon l'une quelconque des revendications 1 à 4.

6. Moteur à combustion interne, de préférence diesel, équipé d'un système catalytique SCR et d'un mixeur selon l'une quelconque des revendications 1 à 4, placé dans le tuyau de gaz d'échappement sortant du moteur.

7. Véhicule équipé d'un moteur selon la revendication 6.
